# EUROPÄISCHE PATENTSCHRIFT

(11) **EP 4 627 299 B1**
(45) Veröffentlichungstag und Bekanntmachung des Hinweises auf die Patenterteilung: **02.12.2026**
(21) Anmeldenummer: 24704161.9
(22) Anmeldetag: 08.02.2024
(51) Int. Cl.: G01H 1/00, G01N 29/14

(54) **VORRICHTUNG ZUR ÜBERWACHUNG DER MONTAGE EINES BAUTEILS, ÜBERWACHUNGSSYSTEM UND ZUGEHÖRIGES VERFAHREN**
DEVICE FOR MONITORING THE ASSEMBLY OF A COMPONENT, MONITORING SYSTEM AND ASSOCIATED METHOD
DISPOSITIF DE SURVEILLANCE D'ASSEMBLAGE DE COMPOSANT, SYSTÈME DE SURVEILLANCE ET PROCÉDÉ ASSOCIÉ

(30) Priorität: 09.02.2023 DE 102023103150
(43) Veröffentlichungstag der Anmeldung: 08.10.2025
(73) Patentinhaber: iNDTact GmbH, 97076 Würzburg (DE)
(72) Erfinder: PETRICEVIC, Raino, 97074 Würzburg (DE); LAUNER, Clemens, 97204 Höchberg (DE)
(74) Vertreter: Dr. Gassner & Partner mbB
(86) Internationale Anmeldenummer: PCT/EP2024/053150
(87) Internationale Veröffentlichungsnummer: WO 2024/165659

(56) Entgegenhaltungen:
- EP-A1- 3 970 913
- DE-A1- 10 308 403
- DE-A1- 102012 004 165
- DE-A1- 102018 133 533
- DE-A1- 102019 212 766

## Beschreibung

Die Erfindung betrifft eine Vorrichtung zur Überwachung der Montage eines Bauteils, mit einem Körperschallsensor, der zum Erfassen von Körperschall und zum Erzeugen eines in einer Signalerfassungselektronik verarbeitbaren Sensorsignals ausgebildet ist.

Bei manuellen Prozessen, zum Beispiel bei einem Steckvorgang, wird das zu steckende Bauteil manuell mit den Fingern oder alternativ automatisch mit einem Greifarm oder einer Greifhand gegriffen. Derartige Prozesse und Tätigkeiten können anhand ihrer Körperschallintensitätssignatur (Zeitverlauf) und anhand der spektralen Signatur (Frequenzgehalt) erkannt und bezüglich der Vollständigkeit, ihres Ursprungs sowie ihrer Qualität bewertet werden. Dies gelingt am besten, wenn das Signal störungsarm und möglichst verlustfrei mit einer gewissen Auflösung erfasst wird. Dazu ist ein möglichst breiter Empfindlichkeitsbereich bezüglich Frequenz und Dynamik erforderlich.

Das Dokument DE 10 2019 212766 A1 betrifft eine auf einen Finger aufsetzbare Vorrichtung mit einem Drucksensor, der in der Lage ist, festzustellen, ob ein manueller Montagevorgang mit der richtigen Druckkraft ausgeführt worden ist.

Die DE 10 2012 004165 A1 schlägt eine Vorrichtung zur Kontrolle eines Montagevorgangs vor, bei dem während eines Steckvorgangs ein Signal durch einen Sensor erfasst wird. Der Sensor kann an einem Montagehandschuh, einem Bekleidungsstück oder an einer am Körper des Benutzers tragbaren Einrichtung, beispielsweise an einem Gürtel, einer Uhr oder an einem Armband, angeordnet sein.

Eine Vorrichtung zur Überwachung der Montage eines Bauteils ist aus der DE 103 08 403 A1 bekannt. Dort wird vorgeschlagen, die Montage des Bauteils durch einen Schallsensor zu überwachen, der ein bei der Montage des Bauteils erzeugtes Schallsignal erfasst. Das Schallsignal wird in ein Messsignal umgewandelt, das einer Auswerteeinheit zugeführt und dort ausgewertet wird. Als Schallbrücke wird eine metallische Einlage in einem Handschuh verwendet, die sich von einer Fingerspitze bis zu dem Schallsensor erstreckt, der ebenfalls in dem Handschuh integriert ist. Allerdings verschleißen derartige Handschuhe, die den Schallsensor aufweisen, vergleichsweise schnell, sodass diese zum Teil bereits nach wenigen Stunden ausgetauscht werden müssen. Da der Schallsensor fest in den Handschuh integriert ist, entstehen für die Montageüberwachung aufgrund der kurzen Nutzungsdauer beträchtliche Kosten.

Der Erfindung liegt daher die Aufgabe zugrunde, eine Vorrichtung zur Überwachung der Montage eines Bauteils anzugeben, die geringere Kosten verursacht.

Zur Lösung dieser Aufgabe ist bei einer Vorrichtung der eingangs genannten Art erfindungsgemäß vorgesehen, dass die Vorrichtung eine Fingerkappe umfasst, an der der Körperschallsensor angebracht ist, wobei die Fingerkappe auf einen Finger eines die Montage durchführenden Benutzers aufsteckbar oder auf einen Handschuhfinger aufsteckbar oder aufklebbar ist.

Die Erfindung beruht auf der Erkenntnis, dass die Nutzungsdauer eines Körperschallsensors beträchtlich erhöht werden kann, wenn der Körperschallsensor nicht fest mit einem Handschuh verbunden oder darin integriert ist. In diesem Fall kann derselbe Körperschallsensor wiederverwendet werden, beispielsweise wenn ein Handschuh, an dem der Körperschallsensor angebracht ist, ersetzt werden muss.

Erfindungsgemäß wird es bevorzugt, dass der Körperschallsensor abnehmbar an der Fingerkappe anbringbar ist. In diesem Fall kann auch die Fingerkappe selbst bei Bedarf ausgetauscht und ersetzt werden, ohne dass der Körperschallsensor ebenfalls ausgetauscht werden muss. Bei Verschleiß einer Fingerkappe wird lediglich die Fingerkappe ersetzt und derselbe Körperschallsensor wird an der neuen Fingerkappe angebracht. Eine Variante der erfindungsgemäßen Vorrichtung sieht vor, dass auch elektrische Leitungen oder Leiterbahnen, die mit dem Sensor lösbar oder nicht lösbar verbunden sind, abnehmbar am Handschuh anbringbar sind. Dadurch kann das komplette in den Handschuh integrierte System bis auf die Fingerkappen als Verschleißteile recycelt oder weiterverwendet werden. Ideal wäre eine direkte Weiterverwendung des Körperschallsensors durch einfaches Aufsetzen auf die Hand oder den Handschuh. Die lösbare Fixierung könnte beispielsweise durch eine Klemmverbindung oder einen Klettverschluss erfolgen.

Es kann auch vorgesehen sein, dass der Körperschallsensor an oder in einem Träger angeordnet ist, der kraft- und/oder formschlüssig und/oder stoffschlüssig an der Fingerkappe anbringbar ist. Der Träger kann zum Beispiel als Rahmen ausgebildet sein, der formschlüssig mit der Fingerkappe verbunden ist. Der Körperschallsensor selbst kann stoffschlüssig mit dem Rahmen oder direkt mit der Fingerkappe verbunden werden.

Im Rahmen der Erfindung wird es bevorzugt, dass die Vorrichtung mehrere Körperschallsensoren aufweist, die an derselben Fingerkappe oder an mehreren Fingerkappen angebracht sind, wobei vorzugsweise zwei oder drei Körperschallsensoren vorhanden sind, die vorzugsweise gleichzeitig betreibbar sind. In diesem Fall können mehrere Körperschallsensoren redundant parallel betrieben werden.

Die Vorrichtung kann dann vorzugsweise ein Sensorsignal erzeugen, das der Summe der additiv überlagerten Signale der einzelnen Körperschallsensoren entspricht. Auf diese Weise kann ein Ausfall eines einzigen Körperschallsensors kompensiert werden.

Vorzugsweise kann ein Koppelmedium zwischen der Fingerkappe und einem Körperschallsensor angeordnet sein, wobei das ablösbare Koppelmedium vorzugsweise Wachs oder ein Schmelzkleber ist. Auf diese Weise wird die akustomechanische Ankopplung zwischen dem Körperschallsensor und der Oberfläche der Fingerkappe verbessert. Wenn die Fingerkappe aus einem Textilmaterial besteht, ist es auch möglich, dass das Koppelmedium nur einen oder mehrere Teile der Fingerkappe bedeckt. Vorzugsweise ermöglicht das ablösbare Koppelmedium eine Dehnung der Fingerkappe. Dadurch wird eine Anpassung an unterschiedlich große Finger ermöglicht. Die dadurch verbesserte Impedanzanpassung reduziert Signalverluste. Das Koppelmedium kann auch folgendermaßen ausgebildet sein: als Gerüst aus einem für Körperschall leitfähigen Material, beispielsweise ein etwas dickeres Kunststoffmaterial oder Metallfilamente, als monolithisches Gerüst aus einem Kunststoffmaterial, als zusätzliche Verstärkung durch ein gestricktes Muster. Das Koppelmedium kann alternativ oder zusätzlich auch ein elastisches Material aufweisen, beispielsweise Heißschmelzkleber, Silikon, Polyurethan oder Kautschuk.

Vorzugsweise kann die Fingerkappe aus einem Textilmaterial bestehen. Vorzugsweise kann die Fingerkappe luftdurchlässige Öffnungen im Bereich der Fingerkuppe aufweisen. Die luftdurchlässigen Öffnungen ergeben sich durch die Textur oder Gewebestruktur des Textilmaterials. Es kann sich dabei um ein abriebfestes Gewebe, beispielsweise Aramid, mit einem eingewebten Metall- oder Kunststofffilament handeln.

Die Fingerkappe kann auch schlauchartig ausgebildet sein und eine Öffnung für eine Fingerspitze aufweisen. Die an der Fingerspitze geöffnete schlauchartige Fingerkappe kann ebenfalls aus einem abriebfesten Gewebe wie Aramid hergestellt sein, dass ein eingewebtes Metall- oder Kunststofffilament besitzt.

Besonders bevorzugt kann zusätzlich dazu noch eine Koppelschicht an der Fingerkappe im Bereich der Kontaktfläche zum zu montierenden Bauteil vorgesehen sein. Beim Greifen des zu montierenden Bauteils wird diese Koppelschicht elastisch verformt, so dass sie sich lokal an die Bauteiloberfläche anpasst und so eine größere Kontaktfläche, d. h. eine Koppelfläche für Körperschall mit dem Bauteil bilden kann. Die Koppelfläche kann z.B. durch Imprägnierung einer Fingerkappe aus Gewebe, z.B. aus Polyamid, Aramid, Polyester etc. mit oder ohne oben genannte zusätzliche Körperschall-leitende Filamente, mit einem gummielastischen Material, wie z.B. Silikon, Polyurethan oder Kautschuk, erfolgen. Vorzugsweise umgibt diese elastische Koppelfläche die gesamte äußere Fingerkappenoberfläche. Bevorzugt deckt die elastische Koppelfläche die Kanten der Fingerkappe ab, so dass keine Kanten mehr zu spüren sind. Beispielsweise kann durch über die Kanten überstehende und sich verjüngende Bereiche der elastischen Schicht der Kantenübergang zum Handschuh komplett geglättet werden. Die Fingerkappe selbst kann dazu aus einem harten Kunststoff bestehen, welcher mit einem gummielastischen Kunststoff überzogen ist. Die Kunststoffkappe kann jedoch auch vollständig aus einem gummielastischen Kunststoff bestehen.

Es kann auch vorgesehen sein, dass die Fingerkappe eine oder mehrere Öffnungen aufweist, die derart angeordnet sind, dass ein Finger eines Benutzers teilweise abgedeckt und teilweise freigelegt ist, wobei vorzugsweise der Bereich einer Fingerkuppe freigelegt ist. Bei dieser Ausgestaltung ergibt sich eine optimale Körperschallankopplung zwischen dem Objekt, beispielsweise einem Stecker, und dem Körperschallsensor bei minimaler Einschränkung des Fingerspitzengefühls. Der Benutzer kann das Objekt somit unmittelbar anfassen, da der Bereich der Fingerkuppe nicht abgedeckt ist. Über die Fingerkappe wird der beim Montieren eines Objekts, beispielsweise eines Steckers, erzeugte Schall an den Körperschallsensor geleitet.

Zur Erleichterung der Benutzung kann es vorgesehen sein, dass der Körperschallsensor und die Signalerfassungselektronik über eine dehnbare elektrische Leitung verbindbar oder verbunden sind, wobei die elastische Dehnung vorzugsweise 5 % bis 20 % beträgt. Zusätzlich kann optional auch die Auswerteeinheit mit der Signalerfassungselektronik z. B. über dehnbare elektrische Leitungen verbunden sein. Die Auswerteeinheit ist jedoch bevorzugt über eine Funkverbindung mit der Signalerfassungselektronik gekoppelt. Die elektrischen Leitungen können zum Beispiel auf dem Handrücken des Benutzers oder in, an oder auf einem Handschuh verlegt oder befestigt sein, z. B. durch eine Klebung, die ablösbar oder nicht ablösbar ist. Die elektrischen Leitungen können auch an oder in einer vorzugsweise ergonomischen und dauergebrauchstauglichen Trägervorrichtung, d.h. einem Leitungsträger, angebracht sein, die an einer Hand oder einem Handschuh abnehmbar befestigbar ist. Die Klebung kann eine ähnliche elastische Dehnung zwischen 5 % und 20 % wie die dehnbare elektrische Leitung besitzen. Da die Leitung vorzugsweise elastisch dehnbar ist, kann sich deren Länge bei einer Bewegung der Hand und/oder der Finger des Benutzers wie eine Feder elastisch dehnen. Die elektrische Leitung kann als twisted-pair-Leitung ausgebildet sein und eine oder mehrere Schirmleitungen aufweisen. Die elektrische Leitung kann einen elastisch dehnbaren Kunststoff als Trägermaterial für ein elektrisch leitfähiges Material besitzen.

Alternativ kann auch ein reißfester Draht, z. B. ein Stahldraht, als elektrische Leitung oder Leiterbahn verwendet werden. Dabei kann es sich vorzugsweise um einen isolierten Draht handeln. Der reißfeste Draht ist vorzugsweise zur Abschirmung mit einem leitfähigen Filament auf einen robusten und hautfreundlichen textilen Träger genäht. Die Enden der reißfesten Drähte, gegebenenfalls auch das leitfähige Filament, werden einerseits mit Kontakten des Sensors und andererseits mit Kontakten in einer Halterung verbunden. Der Anschluss des Sensors erfolgt über zwei Elektroden und die Abschirmung. Die Verbindung der reißfesten Drähte erfolgt vorzugsweise durch Verspleißen.

Die eingenähten Leiterbahnen können sich auch zwischen zwei Textilschichten, einer Trägerschicht und einer Deckschicht, befinden. Die Deckschicht kann z.B. auf die Trägerschicht aufgeklebt sein.

Ein Übergang zu dem Sensorelement kann zur mechanischen Stabilisierung in einer Vergussmasse, z.B. einen Heißschmelzklebstoff, gekapselt sein, welche entweder in die Polymerstruktur der Fingerkappe wieder lösbar eingesetzt werden kann. Alternativ kann der Übergang auch permanent, durch einen Heißschmelzklebstoff, mit der Fingerkappe verklebt sein.

Eine bevorzugte Weiterbildung der Erfindung sieht vor, dass die Signalerfassungselektronik einen Verstärker, einen A/D-Wandler, eine Signalverarbeitungseinheit und vorzugsweise eine Sende- und Empfangseinrichtung aufweist. Die Signalerfassungselektronik kann beispielsweise an oder auf der Hand eines Benutzers angeordnet sein, alternativ kann die Signalerfassungselektronik in einen Handschuh integriert sein. Bevorzugt kann die Signalerfassungselektronik mit einer ergonomischen und dauergebrauchstauglichen Trägervorrichtung, welche auch die elektrischen Leitungen enthält, verbunden sein, die an einer Hand abnehmbar befestigbar ist. Die Signalerfassungselektronik fungiert als Ladungsverstärker mit einstellbarer Filtercharakteristik und als A/D-Wandler sowie als Ringspeicher mit Hochpass- oder Bandpass-Triggerung. Der Trigger wird hierbei mittels des digital hochpassgefilterten oder bandpassgefilterten Signals ausgelöst, gesendet wird dann aber das ungefilterte digitalisierte Rohsignal, das innerhalb des Triggerfensters liegt. Der Ladungsverstärker verbessert die Qualität des elektronischen Signals, wobei vorzugsweise zusätzlich ein analoger Bandpassfilter vorgesehen sein kann, der die schwächer ausgeprägten höheren Signalfrequenzen mehr verstärkt als die niedrigen, bzw. Signalfrequenzen im nutzbaren Frequenzfenster verstärkt und jenseits davon schwächt und/oder dämpft. Nach der Umwandlung des analogen Sensorsignals des Körperschallsensors in dem A/D-Wandler wird das digitale Burst-Signal an eine interne oder externe Auswerteeinheit übertragen, in der die Signalverarbeitung erfolgt. Durch die Auswerteeinheit kann unterschieden werden, ob der entsprechende Montagevorgang ordnungsgemäß stattgefunden hat oder fehlerhaft war. Überraschenderweise kann zusätzlich festgestellt werden, welcher von unterschiedlichen Steckern gerade gesteckt wurde. Dadurch können manuelle Abfolgen festgehalten werden und anhand der dadurch zusätzlich gewonnenen Informationen kann eine lückenlose Rückverfolgung gewährleistet werden.

Die Überwachung von Steckprozessen elektrischer Kabel ist nur ein Beispiel für die Anwendung der erfindungsgemäßen Vorrichtung. Diese kann auch bei anderen Montagevorgängen verwendet werden, Beispiele dafür sind das Stecken von Leitungen, das Stecken von Clips oder der Zusammenbau von Einrastmechanismen. Diese Prozesse weisen die Gemeinsamkeit auf, dass aus einem erfassten akustischen Ereignis auf die Montagequalität geschlossen werden kann. Die erfindungsgemäße Vorrichtung kann nicht nur bei manuellen Prozessen eingesetzt werden, zusätzlich kann es sich auch um automatisch durchgeführte Fertigungsprozesse handeln, die zum Beispiel von einer Maschine, einem Roboterarm oder einem Roboter durchgeführt werden.

Es wird bevorzugt, dass die Signalerfassungselektronik in einem Armband angeordnet ist, das von dem Benutzer getragen werden kann. Ein derartiges Armband behindert den Benutzer nicht bei der Durchführung des Montageprozesses.

Es wird besonders bevorzugt, dass eine Aufnahme für die Signalerfassungselektronik vorhanden ist, so dass die Signalerfassungselektronik als Einheit abnehmbar unmittelbar am Handschuh angebracht werden kann, z. B. im Bereich des Handrückens.

Dazu ist im oder am Handschuh oder in oder an einer Trägervorrichtung (Leitungsträger), die an einer Hand oder einem Handschuh abnehmbar befestigbar ist, eine Aufnahme für die abnehmbar anbringbare Signalerfassungselektronik vorgesehen. Diese Aufnahme hat die Funktion, die Signalerfassungselektronik zu fixieren und elektrischen Kontakt zur Verkabelung und damit zu den Sensorelementen herzustellen, vorzugsweise kann die Aufnahme ebenfalls vom Handschuh abgenommen werden, um sie wieder aufzuladen und nach dem Aufladen wieder zu verwenden.

Die elektrische Kontaktierung kann z. B. mit Hilfe von Steckverbindern oder mittels Federkontakten auf der einen Seite, z. B. auf der Seite der Signalerfassungselektronik, und Kontaktflächen oder Kontaktbuchsen auf der anderen Seite, z. B. auf der Seite der Aufnahme, erfolgen. Die Aufnahme ist bevorzugt kraft- und/oder stoffschlüssig mit dem Handschuh oder einer auf dem Handschuh oder der Hand befestigbaren Trägervorrichtung (Leitungsträger) verbunden.

Die Aufnahme ihrerseits ist mit den entsprechenden elektrischen Kontaktflächen oder Kontaktpunkten ausgestattet, wobei die Aufnahme die Verbindung zu dem Körperschallsensor über im Handschuh oder an oder in einer Trägervorrichtung (Leitungsträger), die an einer Hand oder einem Handschuh abnehmbar befestigbar ist, integrierte oder darauf applizierte Leiterbahnen herstellt.

Die Befestigung der eingehausten Signalerfassungselektronik in dieser Aufnahme kann kraft- und/oder formschlüssig erfolgen, z. B. über eine lösbare Rastkupplung. Die Befestigung kann bevorzugt zusätzlich auch über einen Magnetverschluss erfolgen. Die Aufnahme ist so ausgestaltet, dass die Signalerfassungselektronik leicht herausgenommen werden, jedoch nicht herausfallen kann.

Daneben betrifft die Erfindung ein Überwachungssystem, mit der Vorrichtung zur Überwachung der Montage eines Bauteils, sowie mit einer Sende- und Empfangseinrichtung, die dazu ausgebildet ist, mit der Vorrichtung der beschriebenen Art zu kommunizieren, von der Vorrichtung erhaltene Informationen, die einen Montageprozess betreffen, in einer Auswerteeinheit auszuwerten und eine Rückmeldung an die Vorrichtung zu senden. Die Sende- und Empfangseinrichtung dient als zentraler Server oder als Gateway, das mit dem zentralen Server verbunden ist, in dem die Informationen über ausgewertete Montagevorgänge gesammelt werden. Die Sende- und Empfangseinrichtung hat auch die Funktion, die ausgewerteten Sensorsignale zu bewerten und insbesondere festzustellen, ob sich ein Sensorsignal in einem zulässigen Wertebereich befindet. Das Überwachungssystem umfasst die zentrale Sende- und Empfangseinrichtung und eine oder mehrere Vorrichtungen zur Überwachung der Montage eines Bauteils. Der zentralen Sende- und Empfangseinrichtung können somit auch mehrere oder viele Vorrichtungen, die jeweils von einem Benutzer getragen werden, zugeordnet sein.

Die Auswerteeinheit befindet sich vorzugsweise in dem Überwachungssystem. Allerdings ist es grundsätzlich auch denkbar, dass die Auswerteeinheit dezentral in der Nähe der Fingerkappe, zum Beispiel in einem Handschuh oder in oder an einer Trägervorrichtung (Leitungsträger), die an einer Hand oder einem Handschuh abnehmbar befestigbar ist, angebracht sein kann. Insbesondere kann sich die Auswerteeinheit zusammen mit der Signalerfassungselektronik in demselben Modulgehäuse befinden. In diesem Fall würde die Auswerteeinheit lediglich die Information "in Ordnung" oder "nicht in Ordnung" an das Überwachungssystem senden. Es kann auch vorgesehen sein, dass die Auswerteeinheit zusätzlich oder alternativ zu "in Ordnung" den erkannten Typ des Steckers an das Überwachungssystem sendet.

Daneben betrifft die Erfindung ein Verfahren zur Überwachung der Montage eines Bauteils mit einer Vorrichtung der beschriebenen Art und/oder einem Überwachungssystem der beschriebenen Art, wobei die Vorrichtung einen Körperschallsensor aufweist, der an einer Fingerkappe angebracht ist, die auf einen Finger eines die Montage durchführenden Benutzers aufgesteckt oder auf einen Handschuhfinger aufgesteckt oder aufgeklebt ist.

Die Vorrichtung kann einen oder mehrere Körperschallsensoren aufweisen. Analog kann die Vorrichtung eine oder mehrere Fingerkappen aufweisen, die auf einen oder mehrere Finger aufsteckbar oder auf einen oder mehrere Handschuhfinger aufgesteckt oder aufgeklebt sind.

Gemäß der Erfindung kann es vorgesehen sein, dass die Vorrichtung ein Sensorsignal erzeugt, das aus mehreren sich überlagernden Signalen der einzelnen Körperschallsensoren zusammengesetzt ist.

Eine Weiterbildung der Erfindung sieht vor, dass die Auswerteeinheit zum Auswerten von Sensorsignalen auf der Basis von künstlichen neuronalen Netzwerken ausgebildet ist.

Vorzugsweise kann die Sende- und Empfangseinrichtung bei dem erfindungsgemäßen Verfahren von einer Vorrichtung erhaltene Informationen, die einen Montageprozess betreffen, auswerten und eine Rückmeldung an die Vorrichtung senden. Vorzugsweise kann die Rückmeldung als akustisches und/oder taktiles und/oder optisches Signal von der Vorrichtung ausgegeben werden. Diese Weise erhält der Benutzer unmittelbar eine Rückmeldung darüber, ob ein Montageprozess ordnungsgemäß erfolgt ist oder nicht. Falls der Montageprozess nicht in Ordnung war, kann dieser wiederholt werden, sodass eine fehlerfreie Montage möglich ist.

Die Erfindung wird nachfolgend anhand von Ausführungsbeispielen unter Bezugnahme auf die Zeichnungen erläutert. Die Zeichnungen sind schematische Darstellungen und zeigen:
- Fig. 1A: ein erstes Ausführungsbeispiel der Erfindung mit mehreren erfindungsgemäßen Vorrichtungen, die an einem Handschuh angebracht sind;
- Fig.1B: ein zweites Ausführungsbeispiel der Erfindung;
- Fig. 2: ein Detail einer Fingerkappe;
- Fig. 3: eine weitere Ansicht der in Fig. 2 gezeigten Fingerkappe;
- Fig. 4: ein Detail eines mit einer Fingerkappe versehenen Handschuhs;
- Fig. 5: einen Träger mit einem Körperschallsensor;
- Fig. 6: die an einem Armband befestigte Signalerfassungselektronik;
- Fig. 7: das in Fig. 6 gezeigte Armband in einer geschnittenen Ansicht; und
- Fig. 8: eine schematische Darstellung eines erfindungsgemäßen Überwachungssystems.

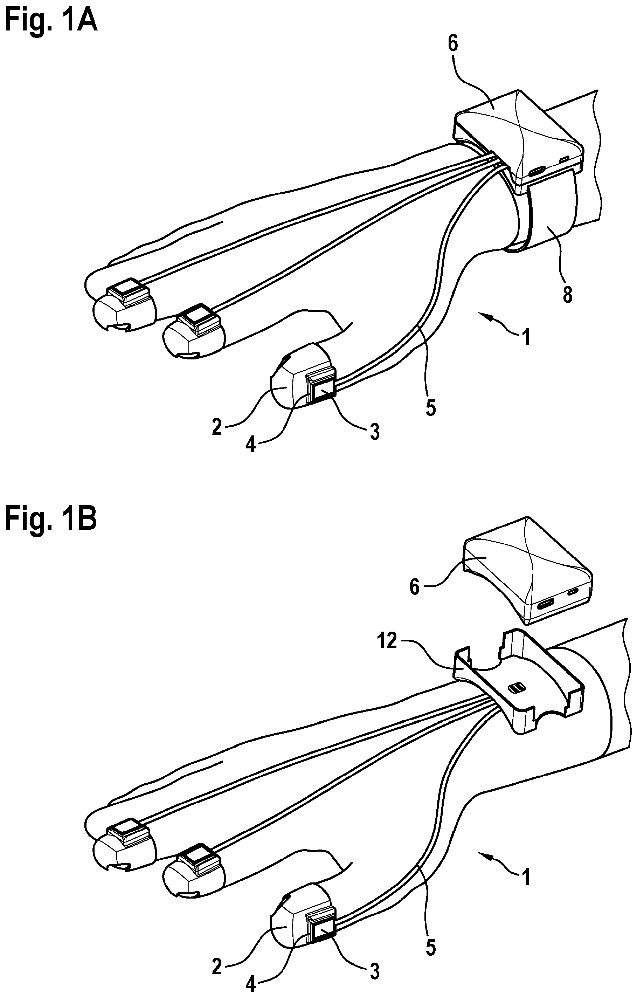

Fig. 1A ist eine perspektivische Ansicht und zeigt einen Handschuh 1, der über die Hand eines Benutzers stülpbar ist. Der Handschuh 1 umfasst insgesamt drei mit dem Handschuh 1 verklebte Fingerkappen 2, die jeweils den Endabschnitt eines Fingers teilweise abdecken. Jede Fingerkappe 2 ist mit einem Körperschallsensor 3 versehen, der an einem Träger 4 befestigt ist. Der Träger 4 besitzt einen Rahmen, an dem der Körperschallsensor 3 lösbar oder nicht lösbar befestigbar ist. Der Träger 4 ist kraft- und/oder formschlüssig an der Fingerkappe 2 angebracht. Jeder Körperschallsensor 3 ist über eine dehnbare elektrische Leitung 5 mit einer Signalerfassungselektronik 6 verbunden. Die Leitung 5 ist elastisch dehnbar, die Dehnung kann zwischen 5 % und 20 % betragen, in dem dargestellten Ausführungsbeispiel beträgt sie 10 %. Die Leitung 5 wird bei einer Bewegung der Hand oder der Finger des Benutzers ebenfalls entsprechend verformt und kann der Bewegung problemlos folgen. Da die Leitung 5 aus einem elastischen Material besteht, kann die Leitung nach dem Ende einer Zugbelastung ihre ursprüngliche Größe und Form wieder annehmen. Bei anderen Ausführungen können auch dehnbare Leiterbahnen anstelle von Leitungen verwendet werden. Derartige dehnbaren Leiterbahnen können auf dem Handrücken des Benutzers oder alternativ in einem Handschuh oder in einem abnehmbaren Träger, der auf den Handrücken bzw. Handschuh abnehmbar befestigbar ist, einfach verlegt werden. Die elastischen Kabel oder Leiterbahnen wirken wie Federn mit Rückstelleffekt, die sich nach einer Auslenkung wieder selbsttätig zurück verformen. Elastische Leiterbahnen können aus geätzten Kupferbahnen oder aus siebgedruckten elektrisch leitfähigen Leiterbahnen, z.B. auf Basis von Silberleitlack oder leitfähigem Polymer, bestehen, die auf einem elastischen Trägermaterial angebracht sind. Pro Körperschallsensor wird ein bipolares Signalleiterpaar in einer oder in zwei Ebenen mäanderförmig verlegt, sodass ein zweidimensionales twisted-pair-Kabel ausgebildet wird. Dehnbare elektrische Leitungen können jedoch auch parallel und gerade in einer oder zwei Ebenen verlaufen.

Der in Fig. 1A gezeigte Handschuh 1 ist optional, grundsätzlich kann die Vorrichtung auch so verwendet werden, dass eine oder mehrere Fingerkappen 2, an denen sich jeweils ein Körperschallsensor 3 befindet, wie ein Fingerhut übergestülpt und über die Leitungen 5 mit der Signalerfassungselektronik 6 verbunden werden.

Die Signalerfassungselektronik 6 ist in einem Modulgehäuse aufgenommen, das an einem Armband 8 befestigt ist. Das Armband 8 umgibt das Handgelenk des Benutzers. Die Leitungen 5 sind sowohl mit den Körperschallsensoren 3 als auch mit der Signalerfassungselektronik 6 über Steckkontakte verbunden.

Fig. 1B zeigt ein ähnliches Ausführungsbeispiel wie Fig. 1A, wobei übereinstimmende Bestandteile mit denselben Bezugszeichen versehen sind. Der Handschuh 1 weist die Fingerkappen 2 mit den Trägern 4 und den Körperschallsensoren 3 auf. Jeder Körperschallsensor 3 ist über eine Leitung 5 mit einer Aufnahme 12 für die abnehmbare Signalerfassungselektronik 6 verbindbar. Wenn die Signalerfassungselektronik 6 in die Aufnahme 12 eingesetzt ist, ist sie über elektrische Kontakte wie Stecker, Buchsen, Pins usw. mit der Aufnahme 12 elektrisch verbunden. Anders als in dem in Fig. 1A gezeigten Ausführungsbeispiel ist die Signalerfassungselektronik 6 über die Aufnahme 12 direkt an der Außenseite des Handschuhs 1 angeordnet. Beim Einsetzen der Signalerfassungselektronik 6 in die Aufnahme 12 geht diese automatisch in Betrieb und beim Herausnehmen wird sie abgeschaltet. Der eingeschaltete Zustand wird durch eine entsprechende Leuchtanzeige signalisiert.

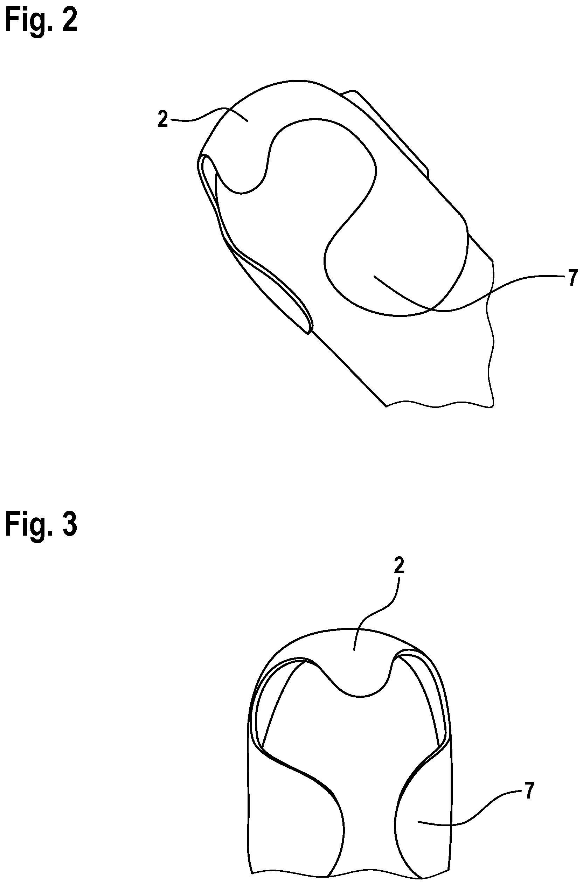

Die Fig. 2 und 3 zeigen ein Detail der Fingerkappe 2, wobei Fig. 2 eine perspektivische Ansicht und Fig. 3 die Unterseite zeigt. Die Fingerkappe 2 umfasst mehrere abgerundete Abschnitte 7, die sich bis zu deren Unterseite erstrecken. Die Unterseite des Fingers ist jedoch ausgespart, d. h. die Abschnitte 7 weisen dort eine durchgehende Öffnung auf und sind freigelegt. Dadurch kann der Benutzer einen Gegenstand, beispielsweise einen Stecker oder dergleichen ohne Beeinträchtigung des Tastsinns mit der Unterseite des Fingers spüren. Ein entsprechender Montagevorgang, beispielsweise das Einstecken eines Steckers in eine Buchse, kann vom Benutzer taktil überwacht werden. Die in Fig. 2 gezeigte Ausführung mit drei flügelartigen Abschnitten 7 ist lediglich als Beispiel zu verstehen.

Es sind auch Abwandlungen möglich, bei denen beispielsweise lediglich ein oder zwei seitliche flügelartige Abschnitte 7 vorhanden sind. Alle Ausführungen weisen die Gemeinsamkeit auf, dass das Fingerspitzengefühl bei maximaler Schallleitfähigkeit möglichst wenig eingeschränkt wird. Dementsprechend ist die Fingerkappe 2 im Bereich der Fingerkuppen so ausgestaltet, dass beim Anfassen eines Gegenstands stets ein Teil der Fingerkappe 2 den Gegenstand direkt berührt. Alternativ kann auch ein indirekter Kontakt bestehen, wenn der Benutzer zusätzlich einen Handschuh trägt.

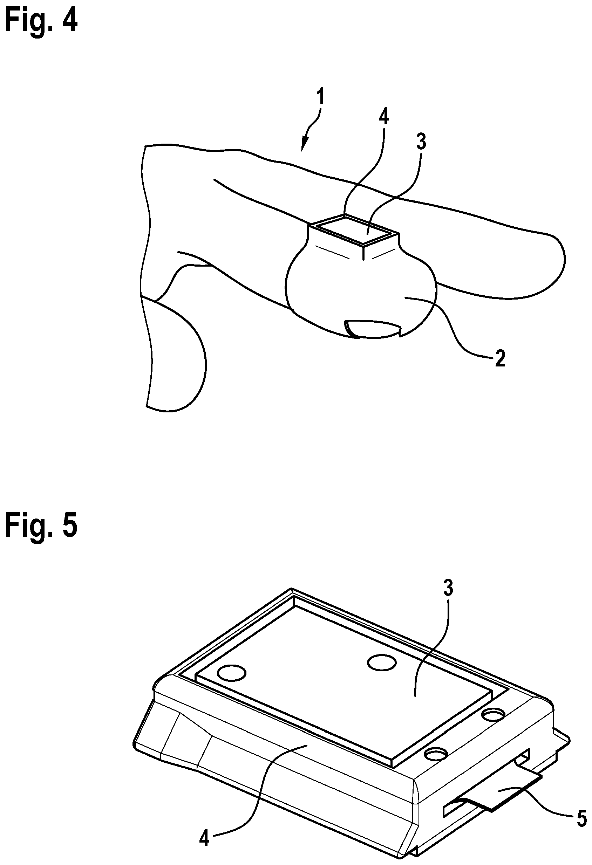

Fig. 4 zeigt den mit der Fingerkappe 2 versehenen Handschuh 1 in einer vergrößerten Ansicht. Auf der Oberseite der Fingerkappe 2 befindet sich der auf dem Träger 4 befestigte Körperschallsensor 3. Die Fingerkappe 2 ist auswechselbar. Sie kann so ausgebildet sein, dass sie allein durch Reibung auf dem Handschuh 1 hält. Sie kann jedoch auch durch einen Klebstoff mit dem Handschuh 1 verbunden sein. Die Befestigung der Fingerkappe ist so beschaffen, dass diese während der Montage nicht verrutschen kann. Sie kann so beschaffen sein, dass sie entfernt werden kann, jedoch kann diese auch nicht ablösbar mit dem Handschuh verbunden sein. Da der Körperschallsensor 3 ebenfalls lösbar befestigt ist, kann er allein oder zusammen mit dem Träger 4 erneut verwendet werden. Dementsprechend ist lediglich die Fingerkappe 2 ein Verschleißteil. Ein Austausch einer Fingerkappe 2 oder des Handschuhs 1 mit oder ohne Fingerkappe 2 kann dementsprechend einfach und kostengünstig durchgeführt werden. Die teuren und damit vorzugsweise austauschbaren Komponenten sind der Körperschallsensor 3 mit dem Kabel und der Signalerfassungselektronik 6. Auch die Aufnahme 12 ist bevorzugt wiederverwendbar. Aber auch eine hier nicht dargestellte Trägervorrichtung für Elektronikaufnahme und Kabel oder Leitungen, die an einer Hand oder an einem Handschuh abnehmbar befestigbar ist, ist bevorzugt wiederverwendbar. Der Handschuh 1 und die Fingerkappe 2 sind Verschleißteile und relativ günstig.

Fig. 5 zeigt den Träger 4 mit dem Körperschallsensor 3. Der auf der Fingerkappe 2 befestigbare Träger 4 ist im Wesentlichen quaderförmig ausgebildet. Er weist eine Öffnung für die einsteckbare Leitung 5 auf, die den Körperschallsensor 3 mit der Signalerfassungselektronik 6 verbindet. An seiner Oberseite besitzt der Träger 4 einen Rahmen, um den Körperschallsensor 3 positionsgenau einzurasten und/oder einzukleben. An der Unterseite des Körperschallsensors 3 sind elektrische Kontakte vorhanden, die mit gegenüberliegenden elektrischen Kontakten in dem Rahmen des Trägers 4 verbunden sind, wenn der Körperschallsensor 3 in den Träger 4 eingesetzt ist.

Da der Träger 4 unmittelbar an der Fingerkappe 2 befestigt ist, ist der Übertragungsweg für Körperschall minimal. Andererseits ist die Signalausbeute maximal. Das von dem Körperschallsensor 3 detektierbare Signal, das zum Beispiel beim Einstecken eines Steckers in eine Buchse entsteht, gelangt mit geringen Verlusten und großer Bandbreite zum Körperschallsensor 3.

Zwischen dem Träger 4 mit eingerastetem und/oder eingeklebtem Körperschallsensor 3 und der Fingerkappe 2 befindet sich eine Kontaktfläche, die durch eine kammförmige oder zahnförmige ineinandergreifende Oberflächenstruktur vergrößert ist. Auf diese Weise wird ein luftspaltbedingter Impedanzsprung minimiert. Zwischen dem Träger 4 mit eingerastetem und/oder eingeklebtem Körperschallsensor 3 und der Fingerkappe 2 wird ein Koppelmedium auf die Kontaktfläche aufgebracht, bei dem es sich um Wachs oder einen Schmelzkleber handelt. Das Koppelmedium bewirkt eine verbesserte Impedanzanpassung, wodurch Signalverluste verringert werden.

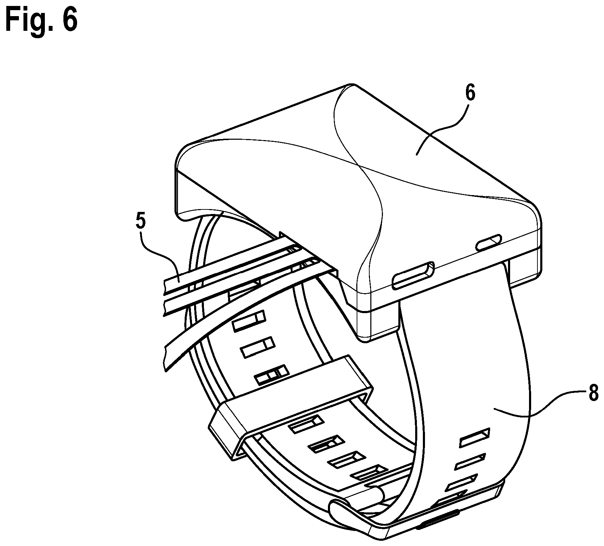

Fig. 6 zeigt die an einem Armband 8 befestigte Signalerfassungselektronik 6. Das Armband 8 kann wie ein Uhrarmband getragen werden. An der zu den Fingern weisenden Seite des Moduls, in dem sich die Signalerfassungselektronik 6 befindet, münden die mit einem Stecker versehenen Leitungen 5, wodurch die Körperschallsensoren 3 mit der Signalerfassungselektronik 6 verbunden werden. Armband und Leitungen können auch in Form einer hier nicht dargestellten abnehmbar befestigbaren Trägervorrichtung ausgebildet sein.

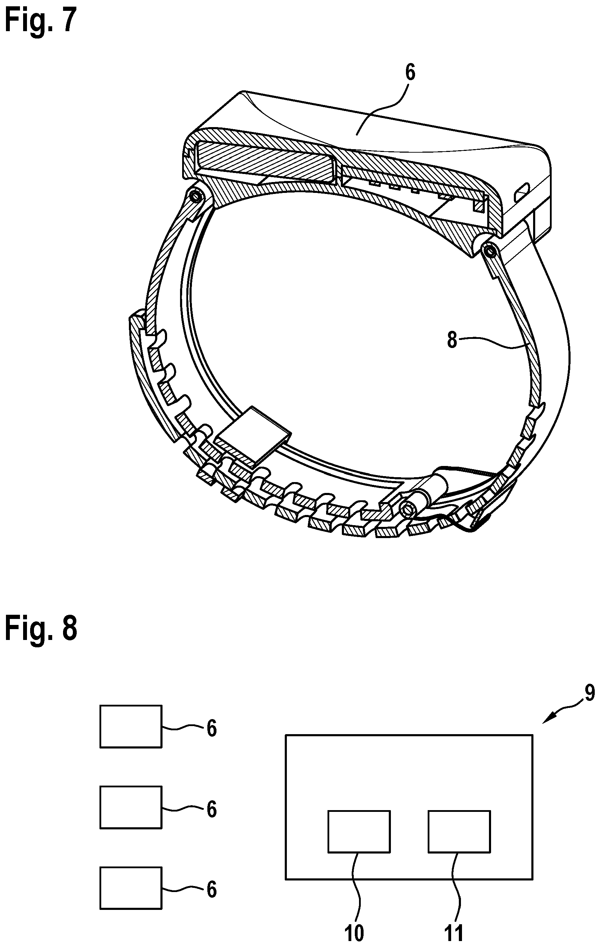

Fig. 7 ist eine ähnliche Ansicht wie Fig. 6 und zeigt das Armband 8 mit der Signalerfassungselektronik 6 in einer geschnittenen Ansicht. Die Signalerfassungselektronik 6 umfasst einen Verstärker, einen A/D-Wandler, eine Signalverarbeitungseinheit und eine Sende- und Empfangseinrichtung. Zusätzlich ist eine aufladbare Batterie integriert. Der Verstärker ist mit einem analogen Bandpassfilter verbunden, um die Qualität des Signals zu erhöhen. Der Bandpassfilter ist so ausgebildet, dass höhere Signalfrequenzen im Messbereich, die eine niedrige Amplitude besitzen, mehr verstärkt werden als niedrige Frequenzen, die eine höhere Amplitude besitzen. Der Bandpassfilter kann aus verschiedenen aktiven und/oder passiven Filtern erster Ordnung oder höherer Ordnung zusammengesetzt sein. Der Verstärker und der Bandpassfilter sind vorzugsweise so ausgelegt, dass Frequenzen, die unterhalb des anvisierten Nutzsignals und oberhalb der Nyquistfrequenz (halbe Abtastfrequenz) liegen, soweit gedämpft werden, dass es weder zu Übersteuerungseffekten noch zu Aliasing-Effekten kommt.

Fig. 8 zeigt schematisch ein Überwachungssystem 9 mit einer Sende- und Empfangseinrichtung 10, die dazu ausgebildet ist, mit mehreren Vorrichtungen der beschriebenen Art, die jeweils eine Signalerfassungselektronik 6 umfassen zu kommunizieren. Das Überwachungssystem 9 umfasst eine Auswerteeinheit 11, in der einen Montageprozess betreffende Informationen, die von einem der Überwachungssysteme 9 übermittelt wurden, ausgewertet werden. In der Auswerteeinheit 11 wird festgestellt, ob der Montageprozess ordnungsgemäß durchgeführt wurde. Falls festgestellt wurde, dass die Montage nicht ordnungsgemäß erfolgt ist, wird eine optische und/oder akustische und/oder taktile Rückmeldung an den Benutzer ausgegeben, sodass er den fehlerhaften Montageprozess korrigieren bzw. wiederholen kann. Sämtliche Montageprozesse werden von der Auswerteeinheit 11 zur Dokumentation gespeichert. Das Auswerten der Sensorsignale erfolgt auf der Basis von künstlichen neuronalen Netzwerken.

### Bezugszeichenliste

- 1: Handschuh
- 2: Fingerkappe
- 3: Körperschallsensor
- 4: Träger
- 5: Leitung
- 6: Signalerfassungselektronik
- 7: Abschnitt
- 8: Armband
- 9: Überwachungssystem
- 10: Sende- und Empfangseinrichtung
- 11: Auswerteeinheit
- 12: Aufnahme

## Patentansprüche

1. Vorrichtung zur Überwachung der Montage eines Bauteils, mit einem Körperschallsensor (3), der zum Erfassen von Körperschall und zum Erzeugen eines in einer Signalerfassungselektronik (6) auswertbaren Sensorsignals ausgebildet ist, **dadurch gekennzeichnet, dass** die Vorrichtung eine Fingerkappe (2) umfasst, an der der Körperschallsensor (3) angebracht ist, wobei die Fingerkappe (2) auf einen Finger eines die Montage durchführenden Benutzers aufsteckbar oder auf einen Handschuhfinger aufsteckbar oder aufklebbar ist.

2. Vorrichtung nach Anspruch 1, wobei der Körperschallsensor (3) abnehmbar an der Fingerkappe (2) anbringbar ist.

3. Vorrichtung nach Anspruch 1 oder 2, wobei der Körperschallsensor (3) an oder in einem Träger (4) angeordnet ist, der kraft- und/oder formschlüssig an der Fingerkappe (2) anbringbar ist.

4. Vorrichtung nach einem der vorangehenden Ansprüche, wobei die Vorrichtung mehrere Körperschallsensoren (3) aufweist, die an derselben Fingerkappe (2) oder an mehreren Fingerkappen (2) angebracht sind, wobei vorzugsweise zwei oder drei Körperschallsensoren (3) vorhanden sind, die weiter vorzugsweise gleichzeitig betreibbar sind.

5. Vorrichtung nach Anspruch 4, wobei die Vorrichtung zum Erzeugen eines Sensorsignals ausgebildet ist, das aus mehreren sich überlagernden Signalen der einzelnen Körperschallsensoren (3) zusammengesetzt ist.

6. Vorrichtung nach einem der vorangehenden Ansprüche, wobei ein Koppelmedium zwischen der Fingerkappe (2) und einem Körperschallsensor (3) angeordnet ist, wobei das Koppelmedium vorzugsweise Wachs oder ein Schmelzkleber ist.

7. Vorrichtung nach einem der vorangehenden Ansprüche, wobei die Fingerkappe (2) eine oder mehrere Öffnungen aufweist, die derart angeordnet sind, dass ein Finger eines Benutzers teilweise abgedeckt und teilweise freigelegt ist, wobei vorzugsweise der Bereich einer Fingerkuppe freigelegt ist.

8. Vorrichtung nach Anspruch 7, wobei die Fingerkappe aus einem Textilmaterial besteht und vorzugsweise luftdurchlässige Öffnungen im Bereich der Fingerkuppe aufweist.

9. Vorrichtung nach Anspruch 7 oder 8, wobei die Fingerkappe schlauchartig ausgebildet ist und eine Öffnung für eine Fingerspitze aufweist.

10. Vorrichtung nach einem der vorangehenden Ansprüche, wobei der Körperschallsensor (3) und die Signalerfassungselektronik (6) über eine dehnbare elektrische Leitung (5) verbindbar oder verbunden sind, wobei die elastische Dehnung vorzugsweise 5 % bis 20 % beträgt.

11. Vorrichtung nach einem der vorangehenden Ansprüche, wobei die Signalerfassungselektronik (6) einen Verstärker, einen A/D-Wandler, eine Signalverarbeitungseinheit und vorzugsweise eine Sende- und Empfangseinrichtung (10) und/oder eine dezentral angeordnete Auswerteeinheit aufweist.

12. Vorrichtung nach einem der vorangehenden Ansprüche, wobei die Signalerfassungselektronik (6) abnehmbar in oder an einem Armband (8) oder in oder an einem Handschuh oder in oder an einer vom Armband (8) oder von dem Handschuh abnehmbaren Tragevorrichtung, welche auch Leitungen enthält, anbringbar und vorzugsweise zum Aufladen eines Energiespeichers abnehmbar ist.

13. Überwachungssystem (9), mit einer Vorrichtung zur Überwachung der Montage eines Bauteils nach einem der Ansprüche 1 bis 12, sowie mit einer Sende- und Empfangseinrichtung (10), die dazu ausgebildet ist, mit der Vorrichtung zur Überwachung der Montage eines Bauteils zu kommunizieren, von der Vorrichtung erhaltene Informationen, die einen Montageprozess betreffen, in einer Auswerteeinheit (11) auszuwerten und eine Rückmeldung an die Vorrichtung zu senden.

14. Verfahren zur Überwachung der Montage eines Bauteils mit einer Vorrichtung nach einem der Ansprüche 1 bis 12 oder einem Überwachungssystem (9) nach Anspruch 13, wobei die Vorrichtung einen Körperschallsensor (3) aufweist, der Körperschall erfasst und ein in einer Signalerfassungselektronik (6) auswertbares Sensorsignal erzeugt, **dadurch gekennzeichnet, dass** der Körperschallsensor (3) an einer Fingerkappe (2) angebracht ist, die auf einen Finger eines die Montage durchführenden Benutzers aufgesteckt oder auf einen Handschuhfinger aufsteckbar oder aufklebbar ist.

15. Verfahren nach Anspruch 14, wobei die Vorrichtung ein Sensorsignal erzeugt, das aus mehreren sich überlagernden Signalen der einzelnen Körperschallsensoren (3) zusammengesetzt ist.

16. Verfahren nach Anspruch 14 oder 15, wobei die Signalerfassungselektronik (6) zum Auswerten von Sensorsignalen auf der Basis von künstlichen neuronalen Netzwerken ausgebildet ist.

17. Verfahren nach einem der Ansprüche 14 bis 16, wobei eine Sende- und Empfangseinrichtung (10) von einer Vorrichtung erhaltene Informationen, die einen Montageprozess betreffen, auswertet und eine Rückmeldung an die Vorrichtung sendet.

18. Verfahren nach einem der Ansprüche 14 bis 17, wobei die von der Sende- und Empfangseinrichtung gesendete Rückmeldung als akustisches und/oder optisches und/oder taktiles Signal von der Vorrichtung ausgegeben wird.

## Claims

1. Device for monitoring the assembly of a component, having a structure-borne sound sensor (3) which is designed to detect structure-borne sound and to generate a sensor signal which can be evaluated in a signal acquisition electronics (6), **characterized in that** the device comprises a finger cap (2), at which the structure-borne sound sensor (3) is attached, wherein the finger cap (2) can be plugged onto a finger of a user carrying out the assembly or can be plugged onto or stuck onto a gloved finger.

2. Device according to claim 1, wherein the structure-borne sound sensor (3) can be detachably attached to the finger cap (2).

3. Device according to claim 1 or 2, wherein the structure-borne sound sensor (3) is arranged on or in a carrier (4) which can be attached to the finger cap (2) in a force-locking and/or form-locking manner.

4. Device according to one of the preceding claims, wherein the device comprises a plurality of structure-borne sound sensors (3) which are attached to the same finger cap (2) or to a plurality of finger caps (2), wherein preferably two or three structure-borne sound sensors (3) are present, which further preferably can be operated simultaneously.

5. Device according to claim 4, wherein the device is designed to generate a sensor signal which is composed of a plurality of superimposed signals from the individual structure-borne sound sensors (3).

6. Device according to one of the preceding claims, wherein a coupling medium is arranged between the finger cap (2) and a structure-borne sound sensor (3), wherein the coupling medium is preferably wax or a hot-melt adhesive.

7. Device according to any one of the preceding claims, wherein the finger cap (2) comprises one or more openings arranged such that a finger of a user is partially covered and partially exposed, wherein preferably the region of a fingertip is exposed.

8. Device according to claim 7, wherein the finger cap is made of a textile material and preferably has air-permeable openings in the area of the fingertip.

9. Device according to claim 7 or 8, wherein the finger cap is tubular and has an opening for a fingertip.

10. Device according to one of the preceding claims, wherein the structure-borne sound sensor (3) and the signal acquisition electronics (6) can be connected or are connected via a stretchable electrical cable (5), wherein the elastic elongation is preferably 5% to 20%.

11. Device according to one of the preceding claims, wherein the signal acquisition electronics (6) comprises an amplifier, an A/D converter, a signal processing unit and preferably a transmitting and receiving device (10) and/or a decentralized evaluation unit.

12. Device according to one of the preceding claims, wherein the signal acquisition electronics (6) is detachably mountable in or on a wristband (8) or in or on a glove or in or on a wearing device which is detachable from the wristband (8) or from the glove and which also contains cables, and is preferably detachable for charging an energy storage device.

13. Monitoring system (9), with a device for monitoring the assembly of a component according to any one of claims 1 to 12, and with a transmitting and receiving device (10), which is designed to communicate with the device for monitoring the assembly of a component, to evaluate information received from the device, which relates to an assembly process, in an evaluation unit (11) and to send feedback to the device.

14. Method for monitoring the assembly of a component with a device according to one of claims 1 to 12 or a monitoring system (9) according to claim 13, wherein the device has a structure-borne sound sensor (3) which detects structure-borne sound and generates a sensor signal which can be evaluated in a signal acquisition electronics (6), **characterized in that** the structure-borne sound sensor (3) is attached to a finger cap (2) which is plugged onto a finger of a user carrying out the assembly or can be plugged onto or stuck onto a gloved finger.

15. Method according to claim 14, wherein the device generates a sensor signal which is composed of a plurality of superimposed signals from the individual structure-borne sound sensors (3).

16. Method according to claim 14 or 15, wherein the signal acquisition electronics (6) is designed to evaluate sensor signals on the basis of artificial neural networks.

17. Method according to any one of claims 14 to 16, wherein a transmitting and receiving device (10) evaluates information received from a device relating to an assembly process and sends feedback to the device.

18. Method according to any one of claims 14 to 17, wherein the feedback sent by the transmitting and receiving device is output by the device as an acoustic and/or optical and/or tactile signal.

## Revendications

1. Dispositif destiné à surveiller le montage d'un composant, comprenant un capteur de bruit de structure (3) conçu pour détecter un bruit de structure et pour générer un signal de capteur pouvant être analysé dans une électronique d'acquisition de signaux (6), **caractérisé en ce que** le dispositif comprend un capuchon de doigt (2) sur lequel est monté le capteur de bruit de structure (3), **en ce que** le capuchon de doigt (2) peut être enfilé sur un doigt d'un utilisateur effectuant le montage ou peut être enfilé ou collé sur un doigt de gant.

2. Dispositif selon la revendication 1, en ce que le capteur de bruit de structure (3) peut être fixé de manière amovible sur le capuchon de doigt (2).

3. Dispositif selon la revendication 1 ou 2, en ce que le capteur de bruit de structure (3) est disposé sur ou dans un support (4) qui peut être fixé par adhérence et/ou par complémentarité de force sur le capuchon de doigt (2).

4. Dispositif selon l'une des revendications précédentes, en ce que le dispositif comporte plusieurs capteurs de bruit de structure (3) qui sont fixés sur un même capuchon de doigt (2) ou sur plusieurs capuchons de doigt (2), de préférence deux ou trois capteurs de bruit de structure (3) qui peuvent de préférence encore fonctionner simultanément.

5. Dispositif selon la revendication 4, en ce que le dispositif est conçu pour générer un signal de capteur qui est composé de plusieurs signaux superposés des différents capteurs de bruit de structure (3).

6. Dispositif selon l'une des revendications précédentes, en ce qu'un moyen de couplage est disposé entre le capuchon de doigt (2) et un capteur de bruit de structure (3), en ce que le moyen de couplage est de préférence de la cire ou une colle thermofusible.

7. Dispositif selon l'une des revendications précédentes, en ce que le capuchon de doigt (2) comporte une ou plusieurs ouvertures qui sont disposées de telle sorte qu'un doigt d'un utilisateur soit partiellement recouvert et partiellement exposé, la zone d'un bout de doigt étant de préférence exposée.

8. Dispositif selon la revendication 7, en ce que le capuchon de doigt est constitué d'un matériau textile et comporte de préférence des ouvertures perméables à l'air dans la zone du bout de doigt.

9. Dispositif selon la revendication 7 ou 8, en ce que le capuchon de doigt est de forme tubulaire et comporte une ouverture pour un bout de doigt.

10. Dispositif selon l'une des revendications précédentes, en ce que le capteur de bruit de structure (3) et l'électronique d'acquisition de signaux (6) peuvent être reliés ou sont reliés par l'intermédiaire d'un câble électrique extensible (5), l'allongement élastique étant de préférence compris entre 5 % et 20 %.

11. Dispositif selon l'une des revendications précédentes, en ce que l'électronique d'acquisition de signaux (6) comporte un amplificateur, un convertisseur A/N, une unité de traitement des signaux et de préférence un dispositif d'émission et de réception (10) et/ou une unité d'évaluation décentralisée.

12. Dispositif selon l'une des revendications précédentes, en ce que l'électronique d'acquisition de signaux (6) peut être fixée de manière amovible dans ou sur un bracelet (8) ou dans ou sur un gant ou dans ou sur un dispositif de support pouvant être détaché du bracelet (8) ou du gant, lequel dispositif de support comprend également des câbles, et étant de préférence amovible pour charger un accumulateur d'énergie.

13. Système de surveillance (9) comprenant un dispositif destiné à la surveillance du montage d'un composant selon l'une des revendications 1 à 12, ainsi qu'un dispositif d'émission et de réception (10) qui est conçu pour communiquer avec le dispositif de surveillance du montage d'un composant, pour évaluer dans une unité d'évaluation (11) les informations reçues du dispositif concernant le processus de montage, et pour envoyer un retour d'information au dispositif.

14. Procédé de surveillance du montage d'un composant au moyen d'un dispositif selon l'une des revendications 1 à 12 ou d'un système de surveillance (9) selon la revendication 13, en ce que le dispositif comporte un capteur de bruit de structure (3), qui détecte un bruit de structure et génère un signal de capteur qui peut être évalué dans une électronique d'acquisition de signaux (6), **caractérisé en ce que** le capteur de bruit de structure (3) est fixé sur un capuchon de doigt (2) qui est enfilé sur un doigt d'un utilisateur effectuant le montage ou qui peut être enfilé ou collé sur un doigt de gant.

15. Procédé selon la revendication 14, en ce que le dispositif génère un signal de capteur qui est composé de plusieurs signaux superposés des différents capteurs de bruit de structure (3).

16. Procédé selon la revendication 14 ou 15, en ce que l'électronique d'acquisition de signaux (6) est conçue pour l'évaluation de signaux de capteur sur la base de réseaux neuronaux artificiels.

17. Procédé selon l'une des revendications 14 à 16, en ce qu'un dispositif d'émission et de réception (10) évalue des informations relatives à un processus de montage reçues d'un dispositif et envoie un retour d'information au dispositif.

18. Procédé selon l'une des revendications 14 à 17, en ce que le retour d'information envoyé par le dispositif d'émission et de réception est émis sous forme de signal acoustique et/ou optique et/ou tactile par le dispositif.
